# EUROPEAN PATENT SPECIFICATION

(11) **EP 0 514 041 B1**
(45) Date of publication and mention of the grant of the patent: **22.07.1998**
(21) Application number: 92303893.9
(22) Date of filing: 30.04.1992
(51) Int. Cl.: H04N 5/46, H04L 1/20

(54) **Digital data decoder using error information for transmission mode selection**
Digitaler Datendekodierer mit durch Fehlernachricht beeinflusster Übertragungsmodusselektion
Décodeur de données numériques utilisant l'information d'erreur pour choisir la mode de transmission

(30) Priority: 02.05.1991 GB 9109578
(43) Date of publication of application: 19.11.1992
(73) Proprietor: TEXAS INSTRUMENTS LIMITED, Bedford MK41 7PA (GB)
(72) Inventor: Ritchie, James Kenneth Alexander, Bedford MK42 0LR (GB); Mitchell, Howard Stephen, Huntingdon, Cambridgeshire PE1 6UR (GB)
(74) Representative: Abbott, David John

(56) References cited:
- EP-A- 0 266 159
- WO-A-87/03717
- WO-A-89/10671
- US-A- 4 672 612
- IEEE TRANSACTIONS ON CONSUMER ELECTRONICS vol. 37, no. 3, August 1991, NEW YORK, US pages 684 - 691 , XP263257 SHIPTON G. & ONYIAGHA G.: 'NICAM DECODER FOR DIGITAL MULTI-CHANNEL TV SOUND BROADCAST'

## Description

The present invention relates to a digital data decoder which is especially suitable for decoding digital data which is encoded in accordance with EBU SPB 424, for example, NICAM 728 format data, but is not exclusively for that data format.

A digital data decoder is required to extract blocks of data from a received signal and to obtain the original data from the extracted blocks. A decoder of digital data may be required to obtain the original data from information which has been compressed, interleaved, and corrupted by noise by expanding the received information, de-interleaving it, and detecting and correcting errors such as those caused by noise corruption. In particular, a decoder for NICAM 728 transmissions is required to recognise and extract key blocks of data, to expand the received data to de-interleave it, and to detect and correct errors in it.

It is an object of the present invention to provide a digital data decoder which is especially, but not exclusively, for NICAM 728 data.

United States Patent No. US-A-4 672 612 discloses a decoder which is capable of checking for errors in received data, accumulating the number of errors detected and providing a signal when the number of errors exceeds a predetermined number, and which stops error correction in response to said signal.

International Patent Application No. WO-A-87/03717 discloses a decoder capable of selecting one of a plurality of channels received simultaneously, in preference to another channel or the other channels, based on an examination of the states of all of the channels. Either a signal formed as the majority of the signals on all channels, or the signal from the channel with the lowest bit error rate is selected to be output.

The present invention provides a decoding arrangement for encoded data comprising:
a decoder including means for checking for errors in received data and means for accumulating the number of errors detected and for providing a signal when the number of errors exceeds a predetermined number,
wherein the decoding arrangement includes a demodulator connected to provide the data for the decoder and to receive the said signal from the decoder, the demodulator having an alterable characteristic for matching to one of a plurality of transmission modes at a time and being so operable as to change its characteristic upon receipt of the said signal to match to a transmission mode other than that giving rise to the said signal.

Preferably, the decoding arrangement includes means for varying the number set as the predetermined number of errors.

Preferably, the decoding arrangement includes means connecting the decoder to a remote control interface for permitting the entry of the set number by way of the remote control interface.

Preferably, the decoding arrangement includes two data processing paths, in which means on one data processing path reads data from selected addresses in an addressable memory and places incoming data in the selected addresses from which data was read and means on the other data processing path selects the next addresses for the reading and writing of data.

Preferably, the decoding arrangement includes a bus-compatible output port.

Preferably, the decoding arrangement includes a remote control interface.

A digital decoder in accordance with the present invention will now be described, by way of example only, with reference to the acompanying drawings, in which:
- Fig. 1: is a diagrammatic representation of the decoder,
- Fig. 2: is a flow chart representation of the operation of the decoder in finding key blocks of data in a serial data stream, and
- Fig. 3: is a diagrammatic representation of the decoder and a demodulator connected together.

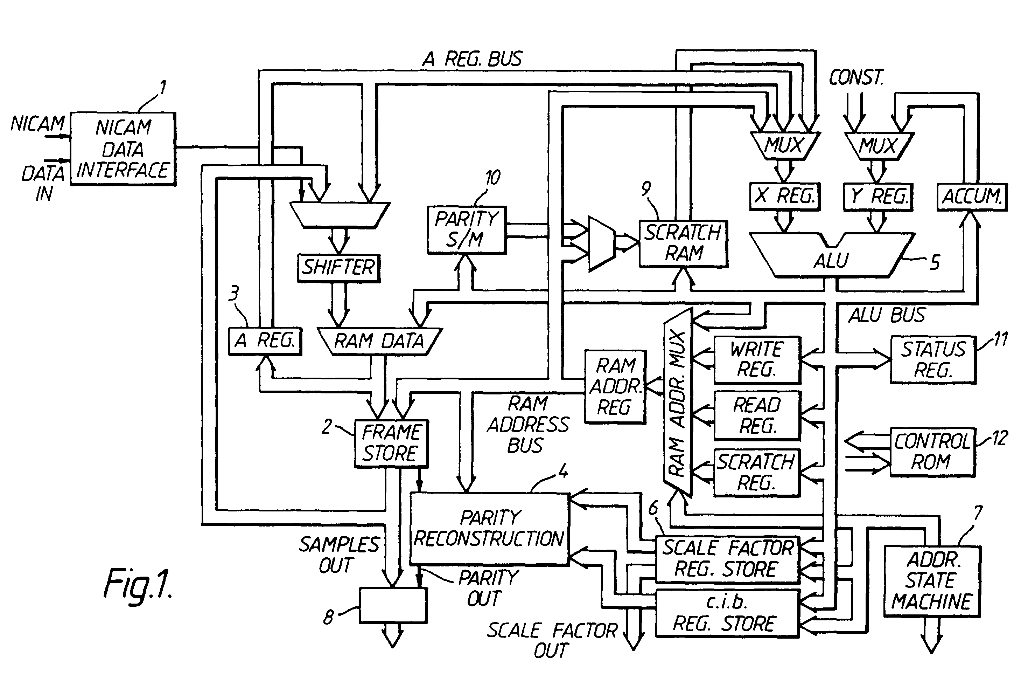

Referring to Fig. 1 of the accompanying drawings, the decoder includes an interface circuit 1, a frame store 2, an A-register 3, a parity reconstruction circuit 4, an arithmetic and logic unit (ALU) 5, a scale factor register store 6, an address state machine 7, an output circuit 8, a scratchpad memory 10, a parity state machine 10, a status register 11, and a control ROM 12 which controls the operation of the decoder.

Referring to Fig. 1, demodulated serial digital data is received by the interface circuit 1 from which it passes to the frame store 2 where it is stored in the order in which it is received and from which it is available in parallel form. The data supplied to the frame store 2 is also available to the A-register 3 which extracts the parity-check information and passes that information to the ALU 5, which passes it to the scale factor register store 6, and the parity reconstruction circuit 4.

Referring to Fig. 1, the parity check information which forms part of the digital data provides information as to the extent of compression of the data which it accompanies and includes, also, error correction facilities. The decoder extracts the parity check information by way of the A-register 3 and supplies data, based on the scale factor information, by way of the scale factor register store 6, for expanding the decoded data by an amount corresponding to the amount by which it was compressed. The decoder also determines the number of errors which are present in the received data and makes the error information available by way of the status register 11. The parity check reconstruction circuit 4 provides an output signal which indicates whether the number of errors found in the data received by the decoder is more than a set number.

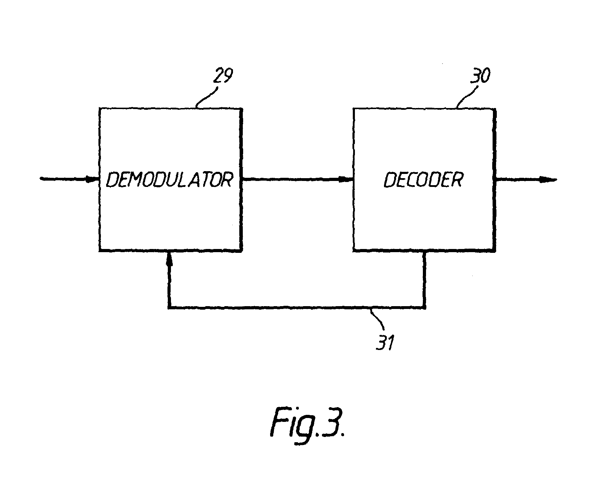

Referring to Fig. 3 of the acompanying drawings, the decoder 30 is connected to a demodulator 29 which provides the demodulated serial data for the decoder 30, and the demodulator 29 receives the output signal from the control ROM 12 of Fig. 1 along a signal connection 31. The demodulator 29 is able to respond to the signal provided by the decoder 30, when that signal indicates that the decoder 29 is unable to decode the received data, by adjusting its bandpass characteristics to demodulate data in a frequency band different from the data giving rise to the decoder signal. The reasons for that mode of operation are that the system is capable of demodulating data which may be centred on 6.552 MHz or on 5.85 MHz, which are, respectively, NICAM system I and NICAM system B/G. The decoder 30 and demodulator 29 will treat incoming data as belonging to NICAM system I, centred on 6.55 MHz, unless the number of received errors exceeds the set level, at which time the decoder 29 (will signal that it cannot decode the received data,) and the demodulator 30 will modify its bandpass parameters as for NICAM system B/G centred on 5.85 MHz.

Referring to Figs. 1 and 3, the demodulator 29 and decoder 30 are capable of detecting more than a set number of errors in received data and of changing their receiving characteristics when more than the set number of errors is detected. Otherwise, the current receiving characteristics are maintained.

Referring to Fig. 1, the output circuit 8 is capable of reducing progressively the magnitude of the decoded output signal when the number of errors accumulated during a set period exceeds the set number. The output circuit 8 receives a signal from the status register 11 and is capable of performing shift operations, by the use of a shift register, on the digital words it receives from the frame store 2 in order to change the magnitude of the output signal. In the situation where the status register 11 indicates that the set number of errors has been exceeded, the output circuit 8 shifts the stored digital signals towards the least significant digit, by progressively more places, until the minimum output signal is provided. When there are fewer than the set number of errors, the stored digital data is shofted by progressively fewer places towards the least significant digit and, eventually, there is no shofting of the output signal.

Referring to Fig. 1, the decoder includes provision for the alteration of the set number of errors to which the device operates. Such alteration would be made by an equipment manufacture during the production of equipment which includes the decoder. The control would be exercised through a remote control interface.

Referring to Figure 1, the decoder processes a serial bit stream and stores it in parallel in the frame store 2.

The decoder has two parallel paths to maximise throughput. In the first path, data is read from the frame store 2, modified with the incoming data bit and stored in the same store location. In the other processor path, the address to be used with next bit operation is selected and any temporary pointers are modified.

Decoding requires that the write/read addresses for data in the frame store 2 be manipulated in real time. In the case when stereo is transmitted the A and B samples are stored alternately in a block of samples for each frame. On alternate frames read and write addresses switch between 0-63 and 64-127.

In the case of mono transmissions more memory is required because of the order in which mono samples are received. At any one time, two frames of data must be kept in a memory while a third frame of data is received and written to the memory. In addition, mono data for two time frames is received in a single frame. The addressing of the memory is much more complex than it is for stereo and the address state machine 7 is used to generate the addresses for the blocks of memory. Mono samples are stored in blocks of 32. The address state machine 7 has to generate addresses for the particular blocks which are being read and written. For example, the following sequence of addresses could be used to read data out

| Simultaneous access of blocks:- | | | | |
|---|---|---|---|---|
| | Read Addresses | | Write Addresses | |
| Frame Count | Block 1 | Block 2 | | |
| 1 | 0-31 | 32-63 | 96-127 | 160-191 |
| 2 | 64-95 | 96-127 | 0-31 | 32-63 |
| 3 | 128-159 | 160-191 | 64-95 | 96-127 |
| 4 | 0-31 | 64-95 | 128-159 | 160-191 |
| 5 | 32-63 | 96-127 | 0-31 | 64-95 |
| 6 | 128-159 | 0-31 | 32-63 | 96-127 |
| 7 | 160-191 | 64-95 | 128-159 | 0-31 |
| 8 | 32-63 | 128-159 | 160-191 | 64-95 |
| 9 | 96-127 | 0-31 | 32-63 | 128-159 |
| 10 | 160-191 | 32-63 | 96-127 | 0-31 |
| 11 | 64-95 | 128-159 | 160-191 | 32-63 |
| 12 | 96-127 | 160-191 | 64-95 | 128-159 |

The sequence then repeats from frame 1. Addressing within the blocks of 32 is done in software. The addressing of the blocks is done by a 4 bit state machine generating 3 address bits for each block which must be read.

Stereo/mono selects between addresses exclusively from the ALU 5 and the addresses whose most significant 3 bits came from the address state machine 7.

When addresses are for mono sound the 6th bit from the read and write latches are used to select between block A and block B of the address space.

The state machine is clocked by a frame clock.

As will be evident from the above description of the manner in which the frame store 2 is addressed, the decoder includes means for taking into account shuffling and interleaving of the data and writing it into the frame store 2 in the correct sequence for application to a digital-to-analogue converter.

As is evident in Fig. 1, there are two data processing paths included in the decoder, and means on one data processing path reads data from selected addresses in the frame store 2 and places incoming data in the selected addresses from which data was read, and means on the other data processing path selects the next addresses for the reading and writing of data.

As has been mentioned above, one of the processing operations performed on the incoming data is the extraction of parity information, which is used to reconstruct a range scale factor for a block of samples.

In the operation of the decoder represented by Fig. 1, each range information bit is coded in 9 samples of received frames of data. Majority voting is performed on accumulated parity information for each coded bit. The accumulated parity information is stored in a scratch memory 9. The addressing for accumulating this parity information is controlled by a state machine 10 which is initialised by software.

Referring to Fig. 1, the range information which is coded in the parity of the samples, alters the parity of samples in the process. After the range information has been extracted from the parity coding it is stored in registers belonging to the ALU 5. The stored scale factor information is then used to reconstruct the original sample parity at the output circuit 8.

The output circuit 8 checks the reconstructed parity for correctness and takes appropriate action (flag an error on the sample or pass the sample to the output stages).

Referring to Fig. 1, additional information (other than scale factors) can also be coded in the parity of some samples. This is also extracted from the parity of samples, majority voting writing performed and the information then stored for parity reconstruction.

The decoder represented by Fig. 1 can lock on to NICAM data coded according to EBU SPB 424. Locking operates on the frame alignment codes and control bit sequences in the NICAM data stream.

The locking procedure in software determines whether NICAM data is present and uses this information to switch the filtering used to demodulate the received NICAM signal, as has been explained above.

The decoder represented by Fig. 1 extracts control information from the received data and writes it to status registers for use by a system interface bus. The control information also controls the program flow in the decoder as the control information indicates the type of information being received.

The decoder represented by Fig. 1 accumulates parity errors and status registers store the information as to the number of errors. The software puts an upper limit on the number of errors written to the status register.

The decoder represented by Fig. 1 also includes a bus-compatible output port and a remote control interface.

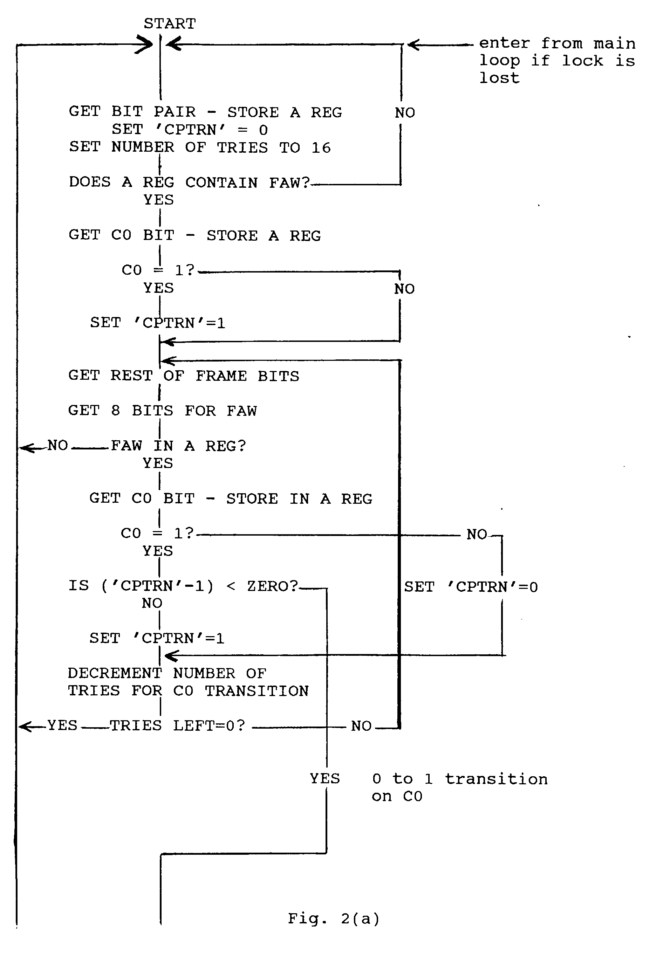

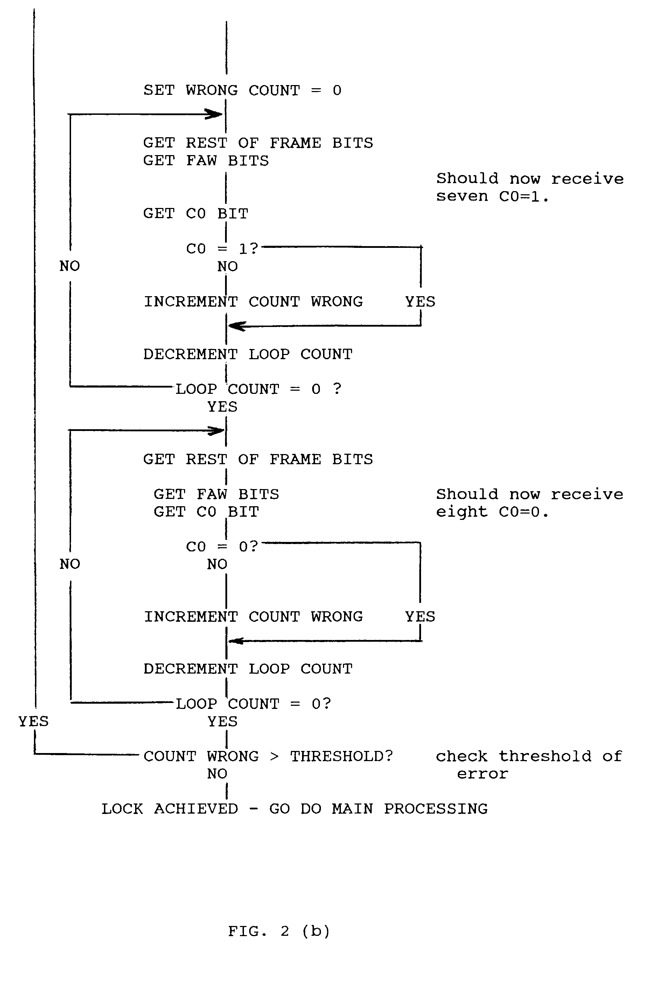

Fig. 2 is a flow chart representation of the operation of the decoder in establishing a locked condition in relation to the data being supplied to the decoder represented by Fig. 1.

Referring to Fig. 2, the decoder first seeks to lock to a fixed code in the Nicam data stream, the frame alignment word (FAW), which occurs once per frame. Once frame alignment words on consecutive frames have been detected the decoder seeks to lock to the first of a block of sixteen frames.

A single control bit following the frame alignment word on each frame forms a pattern of eight binary "1"s then eight binary "0"s over a block of sixteen frames. The decoder seeks to lock on to the first of a block of sixteen frames by examining the received control bits.

If the frames received have binary "0" control bits they are discarded until the arrival of a frame with a binary "1" control bit. Control bits for the following fifteen frames are then retained and verified against the expected received pattern of control bits over a block of sixteen frames. If the control bit pattern is correct then following frames are retained.

If the frames received initially have binary "1" control bits they are all discarded. Following frames with binary "0" control bits are also discarded until the arrival of another frame with a binary "1" control bit. Control bits for the following fifteen frames are then retained and verified against the expected received pattern of control bits over a block of sixteen frames. If the control bit pattern is correct then following frames are retained.

The procedure ensures that decoding always begins with a complete set of 16 frames having a binary pattern of eight "1"s followed by eight "0"s control bits.

As will be evident from the description of how the decoder operates, it is capable of detecting the frame alignment word (FAW) by the use of logic to discard single digits which are not the initial frame alignment and digit and to discard sequences of digits as soon as they deviate from the frame alignment word sequence. Also, the decoder is capable of finding those frames which it is required to store by the use of logic to discard single digits which are not the initial control digit of interest and of discarding specific sequences of control digits which follow a digit which has been discarded, and of discarding the data which follows discarded control digits. The manner of operation of the decoder avoids the need to store significant amounts of data for finding the beginning of data sequences.

## Claims

1. A decoding arrangement for encoded data comprising:
a decoder (30) including means for checking for errors in received data and means for accumulating the number of errors detected and for providing a signal (31) when the number of errors exceeds a predetermined number,
characterised in that
the decoding arrangement includes a demodulator (29) connected to provide the data for the decoder (30) and to receive the said signal (31) from the decoder (30), the demodulator (29) having an alterable characteristic for matching to one of a plurality of transmission modes at a time and being so operable as to change its characteristic upon receipt of the said signal (31) to match to a transmission mode other than that giving rise to the said signal (31).

2. A decoding arrangement as claimed in claim 1, including means for varying the number set as the predetermined number of errors.

3. A decoding arrangement as claimed in claim 2, including means connecting the decoder (30) to a remote control interface for permitting the entry of the set number by way of the remote control interface.

4. A decoding arrangement as claimed in any one of claims 1 to 3, which includes two data processing paths, in which means on one data processing path reads data from selected addresses in an addressable memory and places incoming data in the selected addresses from which data was read and means on the other data processing path selects the next addresses for the reading and writing of data.

5. A decoding arrangement as claimed in any one of claims 1 to 4, which includes a bus-compatible output port.

6. A decoding arrangement as claimed in any one of claims 1 to 5, which includes a remote control interface.

## Patentansprüche

1. Decodieranordnung für codierte Daten, mit:
einem Decodierer (30), der eine Einrichtung zum Prüfen auf Fehler in empfangenen Daten sowie eine Einrichtung zum Akkumulieren der Anzahl erfaßter Fehler und zum Erzeugen eines Signals (31), wenn die Anzahl von Fehlern eine vorgegebene Anzahl von Fehlern übersteigt, enthält,
dadurch gekennzeichnet, daß
die Decodieranordnung einen Demodulator (29) enthält, der so angeschlossen ist, daß er die Daten für den Decodierer (30) bereitstellt und das Signal (31) vom Decodierer (30) empfängt, wobei der Demodulator (29) eine veränderbare Charakteristik für die Einstellung einer von mehreren Übertragungsarten zu einem Zeitpunkt besitzt und so betreibbar ist, daß er seine Charakteristik bei Empfang des Signals (31) ändert, um eine Übertragungsart einzustellen, die von derjenigen, die Anlaß für das Signal (31) gegeben hat, verschieden ist.

2. Decodieranordnung nach Anspruch 1, mit einer Einrichtung zum Ändern der Anzahl, die als die vorgegebene Anzahl von Fehlern gesetzt ist.

3. Decodieranordnung nach Anspruch 2, mit einer Einrichtung, die den Decodierer (30) mit einer entfernten Steuerschnittstelle verbindet, um die Eintragung der festgelegten Anzahl über die Fernsteuerungs-Schnittstelle zu ermöglichen.

4. Decodieranordnung nach irgendeinem der Ansprüche 1 bis 3, die zwei Datenverarbeitungswege enthält, wobei eine Einrichtung in einem Datenverarbeitungsweg Daten aus ausgewählten Adressen in einem adressierbaren Speicher liest und ankommende Daten in den ausgewählten Adressen, aus denen Daten gelesen wurden, anordnet, und eine Einrichtung im anderen Datenverarbeitungsweg die nächsten Adressen zum Lesen und Schreiben von Daten wählt.

5. Decodieranordnung nach irgendeinem der Ansprüche 1 bis 4, die einen buskompatiblen Ausgangsanschluß enthält.

6. Decodieranordnung nach irgendeinem der Ansprüche 1 bis 5, die eine Fernsteuerungs-Schnittstelle enthält.

## Revendications

1. Agencement de décodage pour des données codées comprenant :
un décodeur (30) comportant des moyens pour vérifier des erreurs dans des données reçues et des moyens pour accumuler le nombre d'erreurs détectées et pour délivrer un signal (31) lorsque le nombre d'erreurs dépasse un nombre prédéterminé,
caractérisé en ce que l'agencement de décodage comporte un démodulateur (29) connecté pour délivrer les données au décodeur (30) et pour recevoir ledit signal (31) dudit décodeur (30), le démodulateur (29) ayant une caractéristique altérable pour s'adapter à un parmi plusieurs modes de transmission à un instant et étant actionnable de manière à modifier sa caractéristique lors de la réception dudit signal (31) pour s'adapter à un mode de transmission autre que celui donnant naissance audit signal (31).

2. Agencement de décodage suivant la revendication 1, comprenant des moyens pour faire varier le nombre établi comme le nombre prédéterminé d'erreurs.

3. Agencement de décodage suivant la revendication 2, comprenant des moyens connectant le décodeur (30) à une interface de commande à distance pour permettre l'entrée du nombre établi au moyen de l'interface de commande à distance.

4. Agencement de décodage suivant l'une quelconque des revendications 1 à 3, qui comporte deux trajets de traitement de données, dans lequel des moyens sur un trajet de traitement de données lisent des données provenant d'adresses sélectionnées dans une mémoire adressable et placent les données arrivantes dans les adresses sélectionnées à partir desquelles des données étaient lues et des moyens sur l'autre trajet de traitement de données choisissent les adresses suivantes pour la lecture et l'écriture de données.

5. Agencement de décodage suivant l'une quelconque des revendications 1 à 4, qui comporte un port de sortie compatible à un bus.

6. Agencement de décodage suivant l'une quelconque des revendications 1 à 5, qui comporte une interface de commande à distance.
